# EUROPEAN PATENT APPLICATION

(11) **EP 2 492 254 A1**
(43) Date of publication of application: **29.08.2012**
(21) Application number: 10834250.2
(22) Date of filing: 15.10.2010
(51) Int. Cl.: C04B 14/48

(54) **ULTRA-HIGH-STRENGTH CONCRETE REINFORCED WITH STEEL FIBRES**

(30) Priority: 20.10.2009 ES 200902042
(71) Applicant: Universitat Politécnica De Catalunya, 08034 Barcelona (ES)
(72) Inventor: AGUADO DE CEA, Antonio, E-08034 Barcelona (ES); MOLINS BORRELL, Climent, E-08034 Barcelona (ES); VALLS, Roser, E-08034 Barcelona (ES); KLEIN, Nayara, E-08034 Barcelona (ES)
(74) Representative: Torner Lasalle, Elisabet
(86) International application number: PCT/ES2010/000422
(87) International publication number: WO 2011/067431

(57) **Abstract**

Ultra-high strength steel fibre-reinforced concrete.

It comprises:
• at least one CEM I type Portland cement at a ratio of 600-800 kg/m³, with a minimum compressive strength of 52.5 MPa after 28 days;
• aggregates at a ratio of 900-1300 kg/m³;
• added reinforcement fibres comprising at least one steel fibre at a ratio of 150-210 kg/m³;
• fillers at a ratio of 25-45 kg/m³, including natural calcium carbonate and nano-silica; and
• a polycarboxylate-based superplasticising additive at a ratio of 45-55 kg/m³; and
• drinking water for the mixture at a ratio of 125-160 kg/m³.

## Description

The present invention pertains to the field of ultra-high strength concretes reinforced through the incorporation of metallic fibres in the mixture. The concrete of the present invention finds one particular application, although it is not limited thereto, in the production of ready-made façade panels for buildings constructed with highly industrialised procedures.

### Background of the invention

Ultra-high strength concretes reinforced with the inclusion, among others, of steel fibres have been known at least since 1990, which are known as UHPFRC (ultra-high performance fibre-reinforced concrete).

In patents US 6478867, US6080234, FR2633922, DE3734327, EP934915 and EP1984310, several examples of high strength and ultra-high strength concrete compositions are described that include steel fibres, in general combined with other fibres, particularly organic fibres, for their application in buildings and road structures, which provide good mechanical properties and high impact resistance.

The present invention provides a new concrete formulation alternative to those known in the state of the art and specially adapted for its application in buildings with ready-made façade panels or slabs.

### Brief disclosure of the invention

The UHPFRC concrete of this invention sets as an objective providing the following mechanical properties:

| | |
|---|---|
| Flexural tensile strength fct, fl, k = | 30 N/mm² |
| Tensile strength fct, k = | 10 N/mm² |
| Compressive strength fck = | 100 N/mm² |

The use of metallic fibres is foreseen having a length of 13 mm and a diameter of 0.2 mm, with a share of 2% in the overall volume of the concrete.

In a preferred embodiment, the materials used comprise two types of cement: grey Portland cement from the UNILAND company and grey Portland cement from the CEMENTOS MOLINS company, according to the following specifications:
- UNILAND Portland cement: Grey Portland cement.
- CEMENTOS MOLINS Portland cement: It is a CEM I-type grey Portland cement with a very high compressive strength of 52.5 R, that is, a minimum compressive strength of 52.5 MPa after 28 days, values of 58 MPa being customary,
although using only the second of said cements is feasible.

The rest of the materials used in the mixture for the formation of this concrete are:
- aggregates: two types of sand:
   - beige limestone sand of a grain size of 0-1 mm; and
   - silica sand of a grain size of 0-7 mm;
- added reinforcement fibres:
   - an OL 13/0.20 steel fibre, and
   - three types of PVA (polyvinyl acetate) fibres, which are REC (S) 100×12, REC 15x8 and REC 15×12;
- fillers: natural calcium carbonate and nano-silica;
- a polycarboxylate-based superplasticising additive;
- drinking water for the mixture.

### Brief description of the drawings

Fig. 1 shows the results of the concrete runoff test for the characterisation of the UHPFRC concrete of this invention while still fresh.
Fig. 2 shows the compressive strength results of concretes made according to this invention.
Fig. 3 shows the tensile strength results of said concretes.

### Detailed description of a preferred embodiment

The above-referred component materials are obtained from various suppliers:
- cements from the CEMENTOS MOLINS and UNILAND companies;
- natural calcium carbonate is made from selected calcite, with a high degree of purity, low iron oxide content and lack of heavy metals; the one used is OMYACARB -12 Cl, which is characterised by its wide range of particle size and its purity; the chemical composition of the feedstock provides 97% of CaCO₃ and the 100-micron sieve residue is less than or equal to 0.5%, the 45-micron sieve residue being less than or equal to 10%; production plant: L'Arbog company (Tarragona, Spain);
- the nano-silica is Rheomac VMA 350 (an additive based on a dispersion of unbound spherical nanoparticles of pure silica dioxide, free from chlorides and of very high fineness) supplied by BASF;
- the high-activity, water-reducing, polycarboxylate-based superplasticising additive (suitable for ready mix concretes) is Glenium ACE 425, supplied by BASF;
- the OL 13/0.20 steel fibres were supplied by the N.V. BEKAERT company;
- the PVA fibres were supplied as samples by the Japanese company KURARAY;
- the water was taken from the drinking water supply system of Martorell (Barcelona, Spain).

Next, the attached Table 1 shows the adjustments in the initially anticipated dosing and some tests with PVA fibres for preparing the proposed concrete, according to the indicated specifications.

**Table 1**

| **Materials** | **Consumption of materials (kg/m³)** | | | | |
|---|---|---|---|---|---|
| | **P₁** | **P₂** | **P₃** | **P₄** | **P₅** |
| 52.5R CEM I grey cement | 700 | - | 700 | 700.3 | 762.7 |
| 52.5R BL I white cement | - | 700 | - | - | - |
| 0-1 limestone sand | 1228 | 1228 | - | - | - |
| 0-7 silica sand | - | - | 1228 | 1050.5 | 953.4 |
| Omyacarb 12-CL | - | - | - | 178.1 | 194 |
| Water | 140 | 140 | 140 | 140.1 | 152.5 |
| Superplasticiser | 47.5 | 47.5 | 47.5 | 47.5 | 51.8 |
| Nano-silica | 40 | 40 | 40 | 40 | 43.6 |
| OL 13/0.20 steel fibres | 180 | 180 | 180 | 180 | 180 |

Table 2, which indicates the dosing and PVA fibre adjustments, is also attached.

**Table 2**

| **Materials** | **Consumption of materials (kg/m³)** | | | | | |
|---|---|---|---|---|---|---|
| | **P₆** | **P₇** | **P₈** | **P₉** | **P₁₀** | **P₁₁** |
| 52.5R CEM I grey cement | 762.7 | 762.7 | ***762.7*** | 762.7 | 762.7 | 762.7 |
| 0-7 silica sand | 953.4 | 953.4 | ***1000*** | 953.4 | 953.4 | 953.4 |
| Omyacarb 12-CL | 194 | 213 | ***213*** | 194 | 194 | 194 |
| Water | 132.2 | 127.9 | ***127.9*** | 132.2 | 132.2 | 132.2 |
| Superplasticiser | 51.8 | 51.8 | ***51.8*** | 51.8 | 51.8 | 51.8 |
| Nano-silica | 43.6 | 25 | ***25*** | 43.6 | 43.6 | 43.6 |
| 13/0.20 steel fibres | 180 | 180 | ***180*** | - | - | - |
| PVA 12/0.10 fibres | - | - | - | 12.5 | - | - |
| PVA 8/0.04 fibres | - | - | - | - | 5 | - |
| PVA 12/0.04 fibres | - | - | - | - | - | 5 |

As far as production is concerned, before beginning the production of the concretes, the mixer was wetted and set in motion for a few seconds. This was done in an attempt to have the same conditions in the first run and the remaining ones. The order of pouring of the materials in the mixer is shown in Table 3.

**Table 3**

| | **Materials** | **Mixing time** |
|---|---|---|
| **1** | Sand | 2 minutes, dry mix |
| **2** | Cement | |
| **3** | Filler/quartz | |
| **4** | ½ water and ½ superplasticiser | 3 minutes |
| **5** | ½ water, ½ superplasticiser with the nano-silica | 2 minutes |
| **6** | Fibres | 1 minute |

As seen in said Table 3, the dry materials are added first, proceeding from the coarser to the finer ones, which are sand, cement and filler. These materials are dry-mixed for 2 minutes. Next, half of the water and of the superplasticising additive is added, followed by 3 minutes of mixing. This process is justified by the need of dispersing the cement particles, which keeps the water from being trapped between the flocs of cement that are initially formed.

After this time, the rest of the water and the superplasticising additive can be added together with the nano-silica, which is liquid. The entire batch is mixed for 2 minutes. The addition of water and superplasticiser in two stages provides more workability to the mix, since they are free to operate in the lubrication of the paste, since flocs of cement do not appear at that time. Lastly, fibres are added into the mixer, thereby becoming mixed with the batch for another minute.

In the production of concretes with steel fibres, the granular materials were poured in the mixer in an automated fashion, since the facilities offered that option. Notwithstanding, since they did not involve large quantities and for higher precision, the water, the superplasticising additive and the nano-silica were added manually so as to make it possible to control the quantities added based on the visual perception of the workability of the mix. The fibres were poured directly onto the conveyor. This avoids the direct contact of the worker with the fibres and prevents accidents. This is basic for safety, because those fibres act as needles and they prick the skin when they make contact with it, even if one is wearing gloves.

As for the characterisation in a fresh state, the runoff test was carried out according to the specifications of the UNE 83361: 2007 (AENOR 2007) regulation. That test answers to the need of verifying whether the concrete produced is actually self-compacting. In addition, it allows for the verification of the homogeneity of the material by means of the existence of bleeding and/or segregation of the mix.

The results are shown in Fig. 1.

As for the characterisation in a hardened state test specimens were taken for a compressive strength test of cylindrical bars with an age of 24 hours, 7 and 28 days, according to the UNE 12390-3: 2003 (AENOR 2003) regulation. Test specimens for the Barcelona tensile strength test after 7 days were also taken, according to the PrUNE 83515: 2007 (AENOR 2007) regulation. Table 4 shows the number of moulded test cylinders, for each concrete, where Figure 4 shows the moulding of the test cylinders. The tests carried out in the hardened state aim at characterising the mechanical properties of the concrete for the sake of verifying whether they are compatible with the structural specifications demanded from the material.

The number of test cylinders produced by the concrete test is detailed in Table 4.

**Table 4**

| **Test** | **Age** | **Test bar dimensions (mm)** | **No. of test cylinders** |
|---|---|---|---|
| Compressive strength | 24 hours and 7 days | (150 × 300) | 4 |
| | 28 days | (100 × 200) | 2 |
| Tensile strength | 7 days | (150 × 150) | 2 |

As for the concrete pouring tests with constructive elements, they were carried out with steel shuttering and sealing of seams with neutral silicone.

Either of two types of concrete release agents (acting as setting retardants) was used individually, without any particular repercussions during the form removal:
- Pierii Aquarol TT
- 31-Pieri LM 5

The release agent was applied by hand with a wet sponge or cloth. This gives rise to the formation of streaks-shaped patches on the uncovered face of the concrete.

The release agent was applied by means of a spraying gun so as to achieve higher homogeneity in its application.

## Claims

1. Ultra-high strength steel fibre-reinforced concrete comprising, per m³ of final mixture:
• at least one CEM I-type Portland cement at a ratio of 600-800 kg/m³, with a minimum compressive strength of 52.5 MPa after 28 days;
• aggregates at a ratio of 900-1300 kg/m³;
• added reinforcement fibres comprising at least one steel fibre at a ratio of 150-210 kg/m³;
• fillers at a ratio of 25-45 kg/m³, including natural calcium carbonate and nano-silica; and
• a polycarboxylate-based superplasticising additive at a ratio of 45-55 kg/m³; and
• drinking water for the mixture at a ratio of 125-160 kg/m³.

2. Concrete according to claim 1 **characterised in that** said aggregates comprise two types of sand: limestone sand and silica sand.

3. Concrete according to claim 1 **characterised in that** grey cement or white cement or a mixture thereof is used that provides the indicated cement ratio.

4. Concrete according to claim 1 wherein said silica sand is beige sand of an average grain size of 0-1 mm.

5. Concrete according to claim 1 wherein said silica sand has an average grain size of 0-7 mm.

6. Concrete according to claim 1 wherein said added reinforcement fibres are at least one metallic fibre of OL 13/0.20 steel.

7. Concrete according to claim 6 **characterised in that** said metallic fibres have a length of 13 mm and a diameter of 0.2 mm, with a share of 2% in the overall volume of the concrete.

8. Concrete according to claim 6 **characterised in that** said reinforcement fibres comprise, in addition to said steel fibre, three types of PVA (polyvinyl acetate) fibres, which are REC (S) 100×12, REC 15×8 and REC 15×12.

9. Concrete according to claim 8 **characterised in that** said PVA fibres partake in the concrete with the following ratios:
• PVA 12/0.10 fibres 5-14 kg/m³
• PVA 8/0.04 fibres 4-8 kg/m³
• PVA 12/0.04 fibres 4-8 kg/m³
